# FASCICULE DE BREVET EUROPEEN

(11) **EP 1 092 859 B1**
(45) Date de publication et mention de la délivrance du brevet: **02.02.2005**
(21) Numéro de dépôt: 00402812.2
(22) Date de dépôt: 12.10.2000
(51) Int. Cl.: F02K 1/70

(54) **Inverseur de poussée de turboréacteur**
Schubumkehrvorrichtung für ein Strahltriebwerk
Thrust reverser for a turbojet-engine

(30) Priorité: 14.10.1999 FR 9912805
(43) Date de publication de la demande: 18.04.2001
(73) Titulaire: Hurel-Hispano, 76700 Gonfreville l'Orcher (FR)
(72) Inventeur: JEAN, Michel Christian Marie, 76290 Montivilliers (FR); VICOGNE, Laurent Marcel, 76133 Rolleville (FR)
(74) Mandataire: Chevalier, Renaud Philippe

(56) Documents cités:
- EP-A- 0 846 854
- FR-A- 2 769 953
- US-A- 5 120 004
- US-A- 5 930 991

## Description

La présente invention concerne un dispositif d'inversion de poussée de turboréacteur à double flux. Le turboréacteur est équipé d'un conduit en arrière de la soufflante dont le but est de canaliser le flux secondaire dit froid, ce conduit est constitué d'une paroi interne qui entoure la structure du moteur proprement dite en arrière de la soufflante, et d'une paroi externe dont la partie amont vient en continuité du carter moteur qui entoure la soufflante. Cette paroi externe peut canaliser à la fois le flux secondaire et le flux primaire dans sa partie aval, et ceci en arrière de l'éjection du flux primaire, dit chaud, dans le cas de nacelle à flux mélangés ou à flux confluents par exemple, mais dans d'autres cas, la paroi externe ne canalise que le flux secondaire, dans le cas de nacelles dites à flux séparés.

Une paroi peut également caréner l'extérieur du moteur, c'est à dire l'extérieur du carter qui entoure la soufflante et l'extérieur de la paroi extérieure du conduit décrit ci-dessus, ceci dans le but de minimiser la traînée de l'ensemble propulsif. Ceci est notamment le cas pour des ensembles propulsifs rapportés sur l'extérieur d'aéronef, particulièrement lorsque ces ensembles propulsifs sont attachés sous les ailes ou à l'arrière du fuselage.

Nous appellerons capotage extérieur l'ensemble constitué par la paroi extérieure de la nacelle.

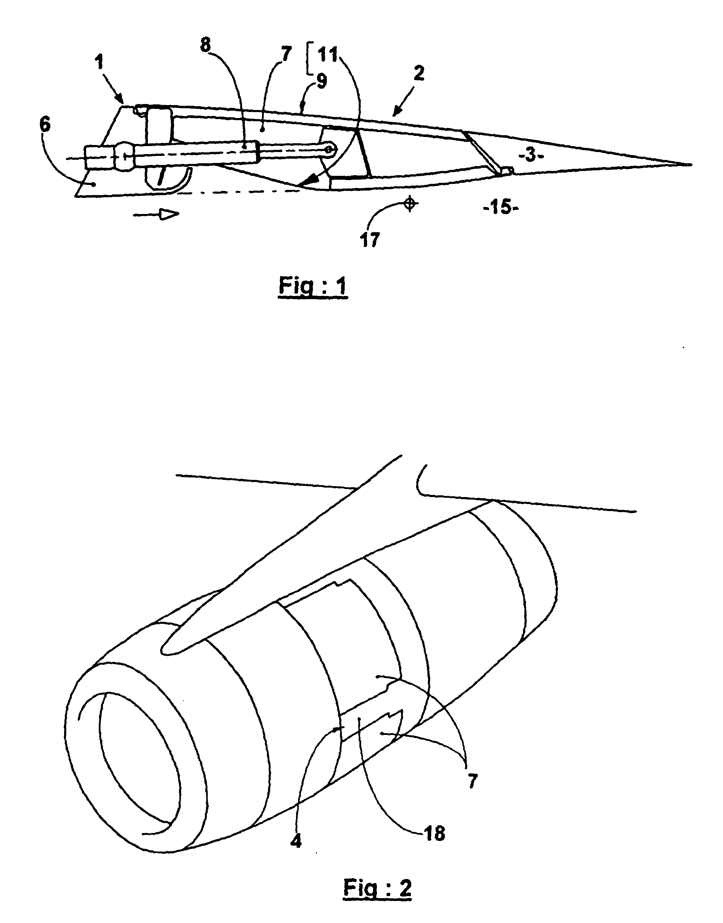

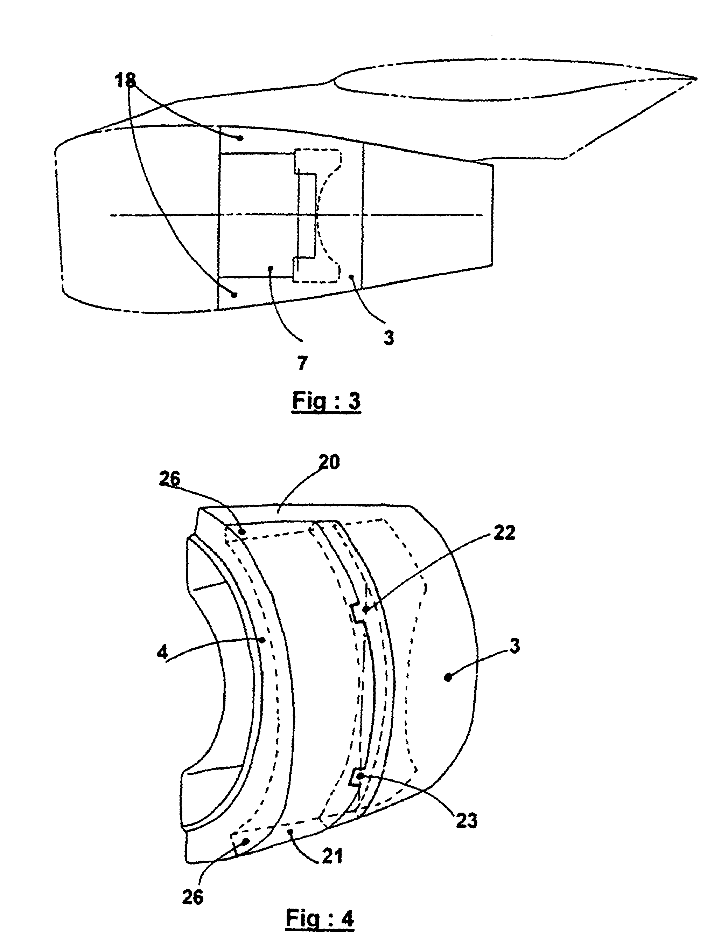

La figure 1 des dessins joints montre un exemple connu de réalisation d'un inverseur de poussée de ce type, appliqué à un turboréacteur à double flux, soit, comme le montre la vue schématique en perspective de la figure 2, avec un inverseur à quatre portes, soit, comme le montre la vue schématique de la figure 3, avec un inverseur à deux portes.

Le dispositif d'inversion est constitué de portes 7 formant une partie mobile 2 et constituant en position inactive, lors d'un fonctionnement en jet direct, une partie du capotage extérieur, et d'une structure fixe réalisant ce capotage extérieur, en amont des portes, par une partie amont 1 puis en aval des portes, par une partie aval 3 et entre les portes 7 par l'intermédiaire de poutres 18 qui relient la partie aval 3 du capotage extérieur à la partie amont 4 du capotage extérieur. Les portes 7 sont montées sur une circonférence du capotage extérieur et sont montées pivotantes dans une zone intermédiaire de leurs parois latérales sur les poutres 18 situées de part et d'autre de ces portes, ces parois latérales constituant avec les parois amont et aval, les parois qui relient la partie extérieure 9 des portes 7, qui constituent une partie de la paroi extérieure de la nacelle, à la partie intérieure 11 des portes 7, qui constituent une partie de la paroi extérieure du conduit.

La partie amont 1 de structure fixe comporte un cadre avant 6 qui sert de support aux moyens de commande des déplacements des portes 7, constitués par exemple par des vérins 8.

En position activée, les portes 7 basculent de telle façon que la partie des portes situées en aval des pivots 17, vient obstruer plus ou moins totalement le conduit 15, et de telle façon que la partie amont des portes vient dégager un passage dans le capotage extérieur de manière à permettre au flux secondaire d'être canalisé radialement par rapport à l'axe du conduit. La partie amont des portes 7 fait saillie à l'extérieur du capotage extérieur pour des raisons de dimensionnement du passage qui doit être capable de laisser passer ce flux sans compromettre le fonctionnement du moteur. L'angle de pivotement des portes est ajusté de manière à permettre le passage du flux et de manière à supprimer la poussée de ce flux, voire à commencer à générer une contre poussée en générant une composante du flux dévié vers l'amont.

Des exemples connus de réalisation sont illustrés par exemple par FR 1 482 538, par FR-A-2 030 034 ou par US 3.605.411.

Enfin la commande des portes d'une position à une autre par vérin est connue en soi, nous noterons cependant la solution très simple où il y a un vérin par porte fixé dans sa partie amont à la structure fixe amont du capotage extérieur, et dans sa partie aval à la porte en un point situé dans la partie amont comme décrit par exemple par FR 1 482 538.

Dans les réalisations connues antérieures, habituellement les interfaces entre les pivots 17 des portes 7 et la structure fixe de l'inverseur de poussée se font sur les flancs des poutres 18. C'est notamment le cas lorsque l'inverseur de poussée comporte quatre portes pivotantes. Pour certaines applications toutefois, et notamment lorsque l'inverseur de poussée comporte seulement deux portes, la recherche d'un fonctionnement optimisé impose certains paramètres tels que la position de l'axe de rotation de la porte et la largeur de la porte qui amènent à écarter les pivots de porte des structures fixes et à mettre en place une ferrure en porte-à-faux supportant le pivot de porte.

Le document US 5 930 991 décrit un inverseur de poussée de turboréacteur à double flux comprenant deux portes aptes à pivoter sous l'action de vérins rattachés à une structure fixe amont. Cependant, dans un tel inverseur, les efforts subis par la porte sont essentiettement supportés par la structure fixe amont car les ferrures de la porte sont reliées à la structure fixe amont et aux poutres fixes longitudinales.

Un des buts de l'invention tout en réduisant la masse des ferrures de pivot est d'éviter l'apparition d'efforts importants sollicitant les poutres de structure fixe en torsion.

Un inverseur de poussée de turboréacteur à double flux du type précité répondant à ces conditions sans encourir les inconvénients des solutions connues antérieures est caractérisé en ce que les pivots de porte sont supportés par des ferrures reliées aux poutres longitudinales fixes et à la partie aval de la structure fixe pour former un ensemble rigide entre la partie amont, la partie aval, les poutres longitudinales fixes, et les ferrures supportant les pivots.

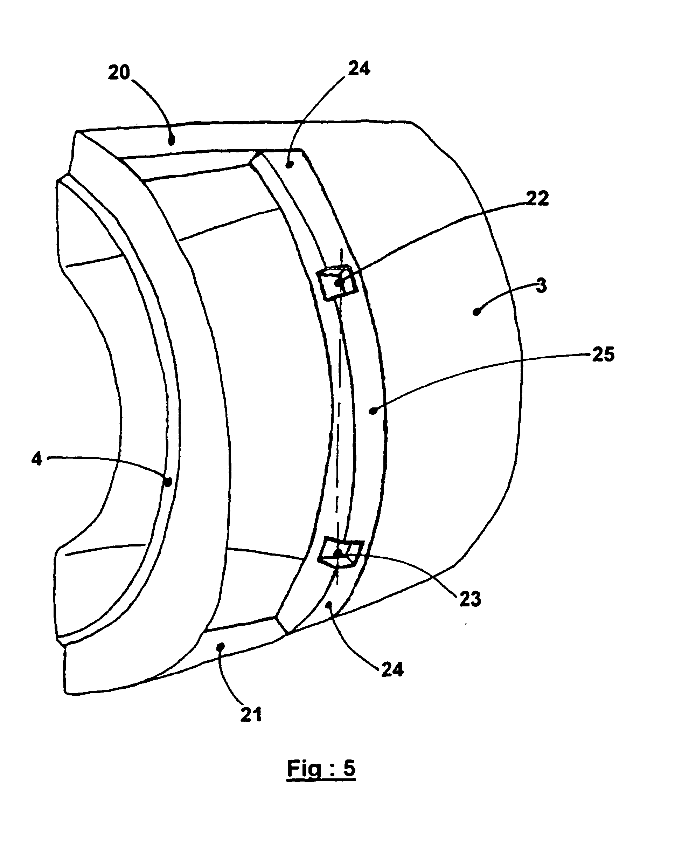

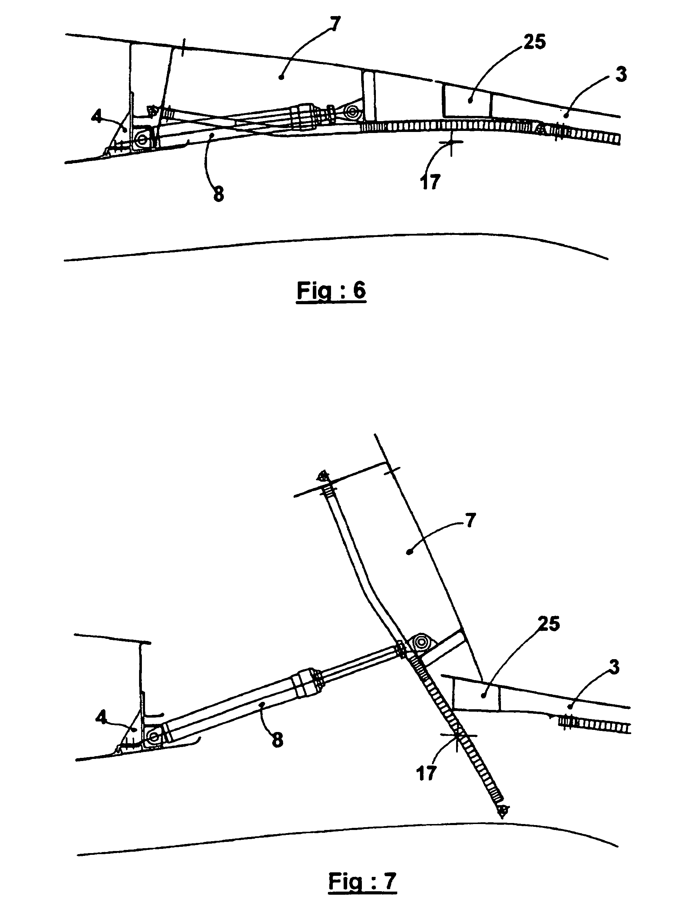

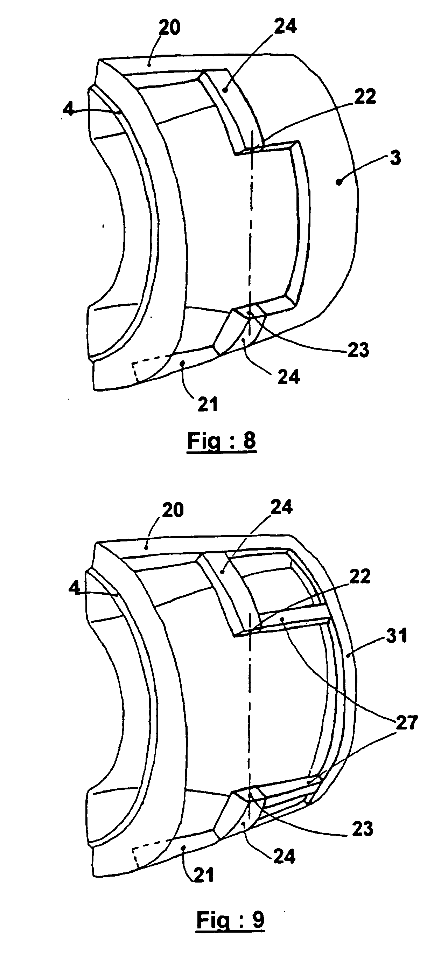

D'autres caractéristiques et avantages de l'invention seront mieux compris à la lecture de la description qui va suivre d'un mode de réalisation de l'invention, en référence aux dessins annexés sur lesquels :
■ La figure 1 représente une demi-vue schématique, en coupe longitudinale par un plan par l'axe de rotation d'un turboréacteur associé, d'un inverseur de poussée à portes pivotantes, en position fermée, d'un type connu et qui a fait précédemment l'objet d'une description ;
■ La figure 2 représente une vue schématique en perspective d'une nacelle comportant un inverseur de poussée à quatre portes du type précité montré en position monté et avec les portes fermées ;
■ La figure 3 représente une vue schématique d'une nacelle installée sur avion et comportant un inverseur de poussée à deux portes du type précité avec les portes fermées ;
■ La figure 4 représente une vue schématique en perspective de la moitié d'un inverseur de poussée conforme à l'invention dans une position de jet direct ;
■ La figure 5 représente selon une vue analogue à celle de la figure 4 la moitié de la structure fixe correspondante de l'inverseur ;
■ La figure 6 représente selon une vue analogue à celle de la figure 1 l'inverseur de poussée conforme à l'invention dans une position de jet direct, le plan de coupe passant par le milieu de la porte d'inverseur ;
■ La figure 7 représente selon une vue analogue à celle de la figure 6 l'inverseur de poussée dans une position d'inversion de poussée ;
■ Les figures 8 et 9 représentent selon une vue analogue à la figure 5, deux variantes de réalisation de l'inverseur de poussée conforme à l'invention.

Selon un mode de réalisation de l'invention représenté sur les figures 4 à 7, un inverseur de poussée de turboréacteur à double flux du type connu en soi et précédemment décrit en référence aux figures 1, 2 et 3, représente un exemple préférentiel d'application de l'invention où le nombre de portes 7 de l'inverseur est de deux. Dans ce cas la partie amont 4 de structure fixe de l'inverseur et la partie arrière 3 de structure fixe de l'inverseur sont reliées par une poutre longitudinale fixe supérieure 20 dite en position 12 heures et par une poutre longitudinale fixe inférieure 21 dite en position 6 heures. Les deux pivots de chaque porte, l'un supérieur 22 et l'autre inférieur 23 sont supportés respectivement chacun par une ferrure 24. Les ferrures 24 sont prolongées jusqu'au plan milieu de la porte et reliées pour former un cadre structural 25, lui-même directement relié aux poutres 20 et 21 de l'inverseur. De ce fait, une structure en caisson est constituée, créant un ensemble rigide entre le cadre structural 25 supportant les pivots 22 et 23 de porte, la structure fixe aval 3, les poutres 20 et21 et la structure fixe amont 4 de l'inverseur. De cette manière, on évite l'apparition de contraintes préjudiciables de torsion dans les poutres 20 et 21, un cheminement avantageux des efforts au niveau des pivots 22 et 23 de portes est obtenu et les efforts dus aux chargements dans les pivots 22 et 23 de portes transitent directement dans la structure fixe de l'inverseur de poussée.

De manière avantageuse, les dispositions de l'invention qui viennent d'être décrites sont appliquées à un inverseur de poussée à portes dans lequel chaque vérin 8 de commande des déplacements des portes 7 est installé de manière optimisée, alignant les deux points de liaison du vérin 8, respectivement avec la porte 7 et avec la structure fixe amont 4 de l'inverseur, avec le point d'accrochage de l'inverseur sur le turboréacteur, conformément à l'invention décrite par EP.0835999 A.

Il est par ailleurs connu en soi d'équiper les inverseurs de poussée à portes de plusieurs systèmes de verrouillage maintenant les portes en position fermée. De manière classique, un verrou primaire mécanique est situé entre le cadre avant de structure fixe de l'inverseur et la structure amont des portes, un verrou secondaire est placé dans le vérin de commande des déplacements de porte et un troisième verrou électrique est situé dans une zone décalée par rapport aux verrous primaire afin d'éviter un endommagement simultané, notamment en cas d'incident d'origine du turboréacteur. Toutefois, une interface entre verrou primaire de porte et cadre avant de structure fixe impose un renforcement structural du cadre avant. En outre, un emplacement des verrous primaires vers le milieu de porte habituellement utilisé induit des déformations de porte, notamment dans les coins de porte, sous l'effet des pressions exercées par le flux, ce qui est préjudiciable aux performances aérodynamiques.

Par suite, en complément au cheminement amélioré des efforts développés au niveau des pivots de portes, l'invention recherche également une amélioration des cheminements des efforts au niveau des verrous primaires de portes vers la structure fixe. Dans ce but, et de manière avantageuse, un verrou primaire 26 est placé sur chaque flanc de porte et les efforts d'interface sont repris sur les poutre de l'inverseur. Cette disposition permet un allégement du cadre avant de structure fixe qui n'est plus soumis à des efforts de torsion. En outre, les déformations de la porte sont réduites et le verrou secondaire placé dans le vérin de commande peut être supprimé.

Suivant une variante de réalisation représentée sur la figure 8, dans certaines applications, la rigidité de la porte 7 peut être renforcée en prolongeant vers l'arrière le panneau extérieur 9 et les parois latérales formant ainsi avec le panneau intérieur 11 un caisson rigide supportant les efforts de pression, les ferrures 24 sont alors directement reliées à la structure arrière fixe 3 de l'inverseur pour former un ensemble rigide entre les structures fixes amont et aval, les poutres et les ferrures pivot.

En complément à la réalisation précitée et décrite par la figure 8, les liaisons entre les ferrures 24 et la structure fixe aval 3 peuvent se faire, suivant la représentation sur la figure 9, entre les pivots 22 et 23 et un cadre arrière 31 appartenant à la structure fixe aval, connu en soi sur les nacelles à flux mélangés. Ces liaisons 27 pouvant être du type bielles, ferrures ou caissons.

## Revendications

1. Inverseur de poussée de turboréacteur à double flux comportant une partie mobile comprenant au moins deux portes (7) pivotantes constituant, d'une part, en position fermée, lors d'un fonctionnement en jet direct, une partie du capotage extérieur de la nacelle, et d'autre part, après pivotement sous l'action de moyens (8) de commande des déplacements, des obstacles de déviation de flux en dégageant un passage dans le capotage extérieur lors d'un fonctionnement en inversion de poussée, ledit inverseur comportant en outre une structure fixe constituée d'une partie amont (4) servant de support aux moyens (8) de commande des déplacements, d'une partie aval (3), et de poutres longitudinales fixes (20, 21) reliant les parties amont (4) et aval (3) **caractérisé en ce que** les pivots (22, 23) de porte (7) sont supportés par des ferrures (24) reliées aux poutres longitudinales fixes (20, 21) et à la partie aval (3) de la structure fixe pour former un ensemble rigide entre la partie amont (4), la partie aval (3), les poutres longitudinales fixes (20, 21) et les ferrures (24) supportant les pivots (22, 23).

2. Inverseur de poussée de turboréacteur selon la revendication 1, **caractérisé en ce que** les portes pivotantes (7) sont au nombre de deux.

3. Inverseur de poussée de turboréacteur selon l'une quelconque des revendications 1 ou 2, **caractérisé en ce que** les ferrures (24) sont reliées entre elles pour former un cadre structural lui-même directement relié aux poutres fixes longitudinales (20, 21) de l'inverseur.

4. Inverseur de poussé de turboréacteur selon l'une quelconque des revendications 1 à 3, **caractérisé en ce qu'**un verrou primaire mécanique (26) est placé sur chaque flanc de porte (7) et les efforts d'interface du verrou (26) sont repris sur les poutres (20, 21) de l'inverseur.

5. Inverseur de poussé de turboréacteur selon l'une quelconque des revendications 1 à 3, **caractérisé en ce que** les pivots (22, 23) de porte (7) sont supportés par des ferrures (24) reliées aux poutres (20, 21) et à la structure aval (3).

6. Inverseur de poussée de turboréacteur selon la revendication 5, **caractérisé en ce que** les ferrures (24) sont reliées au cadre arrière (31) de la structure fixe aval (3) par une liaison type ferrures, bielles ou caisson.

## Claims

1. A bypass turbojet thrust reverser comprising a movable portion containing at least two pivoting doors (7) consisting of, on the one hand, in the closed position and when functioning in the direct thrust position, a portion of the external cowling of the nacelle and, on the other hand, after pivoting under the action of the means (8) for controlling the displacements, obstacles for deflecting the flow by releasing a passage in the external cowling when functioning in the thrust reversal position, said reverser further comprising a fixed structure consisting of an upstream portion (4) acting as a support for the means (8) for controlling the displacements, a downstream portion (3) and fixed longitudinal beams (20, 21) connecting the upstream and downstream portions (4, 3), **characterised in that** the pivots (22, 23) of the door (7) are supported by fittings (24) connected to the fixed longitudinal beams (20, 21) and to the downstream portion (3) of the fixed structure to form a rigid assembly between the upstream portion (4), the downstream portion (3), the fixed longitudinal beams (20, 21) and the fittings (24) supporting the pivots (22, 23).

2. Turbojet thrust reverser according to claim 1, **characterised in that** the pivoting doors (7) are two in number.

3. Turbojet thrust reverser according to either claim 1 or 2, **characterised in that** the fittings (24) are connected to one another to form a structural frame directly connected to the fixed longitudinal beams (20, 21) of the reverser.

4. Turbojet thrust reverser according to any of claims 1 to 3, **characterised in that** a primary mechanical lock (26) is placed on each longitudinal side of the door (7)
and the interface loads of the lock (26) are absorbed by the beams (20, 21) of the reverser.

5. Turbojet thrust reverser according to any of claims 1 to 3, **characterised in that** the pivots (22, 23) of the door (7) are supported by fittings (24) connected to the beams (20, 21) and to the downstream structure (3).

6. Turbojet thrust reverser according to claim 5, **characterised in that** the fittings (24) are connected to the rear frame (31) of the fixed downstream structure (3) by a fitting, connecting rod or box type connection.

## Patentansprüche

1. Schubumkehreinrichtung eines Zweistrom-Turbinentriebwerks mit einem beweglichen Teil umfassend mindestens zwei Schwenktüren (7), die einerseits in geschlossener Stellung bei Direktstrahlbetrieb einen Teil der äußeren Verkleidung der Gondel bilden und andererseits, nach dem Verschwenken aufgrund der Betätigung durch die Mittel (8) zur Steuerung der Bewegungen, Hindernisse zur Umlenkung des Stroms dadurch bilden, dass bei einem Schubumkehrbetrieb in der äußeren Verkleidung ein Durchgang freigegeben wird, wobei die Schubumkehreinrichtung zudem eine feste Struktur aufweist, welche aus einem vorgeschalteten Teil (4), das den Mitteln (8) zur Steuerung der Bewegungen als Lager dient, aus einem nachgestalteten Teil (3) und aus festgelegten, das vorgeschaltete (4) und das nachgeschaltete Teil (3) verbindenden Längsbalken (20, 21) besteht, **dadurch gekennzeichnet, dass** die Drehzapfen (22, 23) der Türen (7) durch Beschläge (24) gehaltert sind, welche mit den festgelegten Längsbalken (20, 21) und dem nachgeschalteten Teil (3) der festen Struktur verbunden sind, um zwischen dem vorgeschalteten Teil (4), dem nachgeschalteten Teil (3), den festgelegten Längsbalken (20, 21) und den Beschlägen (24), die die Drehzapfen (22, 23) haltern, eine steife Baugruppe zu bilden.

2. Schubumkehreinrichtung eines Turbinentriebwerks nach Anspruch 1, **dadurch gekennzeichnet, dass** zwei Schwenktüren (7) vorgesehen sind.

3. Schubumkehreinrichtung eines Turbinentriebwerks nach einem der Ansprüche 1 oder 2, **dadurch gekennzeichnet, dass** die Beschläge (24) miteinander verbunden sind, um einen Strukturrahmen zu bilden, der wiederum direkt mit den festgelegten Längsbalken (20, 21) der Schubumkehreinrichtung verbunden ist.

4. Schubumkehreinrichtung eines Turbinentriebwerks nach einem der Ansprüche 1 bis 3, **dadurch gekennzeichnet, dass** auf jeder Türflanke (7) eine primäre mechanische Verriegelung (26) angeordnet ist und dass die Grenzflächenkräfte der Verriegelung (26) von den Balken (20, 21) der Schubumkehreinrichtung aufgenommen werden.

5. Schubumkehreinrichtung eines Turbinentriebwerks nach einem der Ansprüche 1 bis 3, **dadurch gekennzeichnet, dass** die Drehzapfen (22, 23) der Türen (7) durch Beschläge (24) gehaltert sind, welche mit den Balken (20, 21) und mit der nachgeschalteten Struktur (3) verbunden sind.

6. Schubumkehreinrichtung eines Turbinentriebwerks nach Anspruch 5, **dadurch gekennzeichnet, dass** die Beschläge (24) mit dem hinteren Rahmen (31) der nachgeschalteten festen Struktur (3) über eine Verbindung des Typs Beschläge, Stangen oder Kasten verbunden sind.
